# EUROPEAN PATENT APPLICATION

(11) **EP 2 088 571 A2**
(43) Date of publication of application: **12.08.2009**
(21) Application number: 08022167.4
(22) Date of filing: 19.12.2008
(51) Int. Cl.: G08G 1/16

(54) **Driving support device, driving support method and program**

(30) Priority: 11.02.2008 JP 2008029824
(71) Applicant: Aisin AW Co., Ltd., Fujii-cho Anjo-shi, Aichi 444-1192 (JP)
(72) Inventor: Okabe, Hidefumi, Okazaki-shi Aichi 444-8564 (JP); Ishikawa, Ken, Okazaki-shi Aichi 444-8564 (JP); Kokuryuu, Tomoyuki, Okazaki-shi Aichi 444-8564 (JP); Takagi, Minoru, Okazaki-shi Aichi 444-8564 (JP)
(74) Representative: Schmidtchen, Jürgen Christian

(57) **Abstract**

A CPU obtains road shape information regarding a shape of a road ahead of a vehicle from map information stored in a map information DB. Further, the CPU calculates a blind spot region for a driver generated by a right front pillar. In addition, when it is determined that at least a part of the calculated blind spot region is overlapped with a road ahead in a traveling direction, the CPU displays a shot image corresponding to the blind spot region shot by the camera on a pillar display. Thereafter, when the calculated blind spot region is determined not to be overlapped with the road ahead in the traveling direction within five seconds, the CPU stops the display of a video on the pillar display.

## Description

### 1. Field of the Invention

The present invention relates to a driving support device, a driving support method and a program for compensating a visibility in a direction of blind spot for a driver generated by a vehicle.

### 2. Description of the Related Art

Conventionally, various techniques for compensating a visibility in a direction of blind spot for a driver generated by a vehicle have been proposed.
For instance, there is a driving support device configured to display, when a vehicle approaches an intersection with no traffic lights at a low speed which is determined by map information, a vehicle speed sensor and a direction sensor, an image in the direction of a road which becomes a blind spot with respect to a traveling direction of the vehicle (for instance, refer to Japanese Patent Application Publication No. JP-A-2000-238594 (paragraphs (0059) to (0062), FIG 21 to FIG. 24).

However, the driving support device disclosed in the aforementioned Japanese Patent Application Publication No. JP-A-2000-238594 has a problem such that, although an image of intersection can be displayed in accordance with a timing at which the vehicle enters the intersection, when a road ahead in the traveling direction is the one other than the intersection, which is, for instance, a left curve, a right curve or the like, it is impossible to compensate a visibility of a blind spot region ahead in the traveling direction generated by a front pillar.

Accordingly, the present invention was devised in order to solve problems with related art and it is an object of the present invention to provide a driving support device, a driving support method and a program capable of compensating a visibility of a blind spot region ahead in a traveling direction generated by a front pillar.

In a driving support device according to a first aspect configured as above, when at least a part of a calculated blind spot region for a driver generated by a front pillar of a vehicle is overlapped with a road ahead in a traveling direction, image data corresponding to the blind spot region for the driver is output, so that it becomes possible to display the image data. Accordingly, the driver can easily recognize a state of a road ahead in the traveling direction being the blind spot region generated by the front pillar.

Further, when the blind spot region for the driver is not overlapped with the road ahead in the traveling direction, the image data corresponding to the blind spot region for the driver is not output, so that the image data is not displayed. Accordingly, the driver is prevented from paying attention to unnecessary video display.

In a driving support device according to a second aspect, image data corresponding to a blind spot region for a driver is displayed, and thereafter, when the blind spot region for the driver is not overlapped with a road ahead in a traveling direction for a predetermined period of time or more, the display of the image data is stopped. Accordingly, it becomes possible to eliminate a trouble for the driver by preventing a frequent ON/OFF switching of the display of the image corresponding to the blind spot region for the driver.

In a driving support device according to a third aspect, when a shape of a road ahead in a traveling direction of a vehicle takes curves which continue for a predetermined distance or less, it becomes possible to continuously display image data corresponding to a blind spot region for a driver generated by a front pillar until the vehicle passes through the last curve. Accordingly, it becomes possible to eliminate a trouble for the driver by preventing a frequent ON/OFF switching of the display of the image corresponding to the blind spot region for the driver.

Also in a driving support method according to a fourth aspect and a program according to a fifth aspect, it is possible to provide the same effect as that of the aforementioned driving support device according to the first aspect.

FIG. 1 is an exterior view of a vehicle on which a navigation apparatus according to the present embodiment is mounted;
FIG. 2 is a view showing a setting example of a camera;
FIG. 3 is a view showing an example of a pillar display provided on a right front pillar;
FIG. 4 is a block diagram schematically showing a control system having the navigation apparatus to be mounted on the vehicle as a center;
FIG. 5 is a flow chart showing an image display processing which displays a video of a road ahead in a traveling direction on the pillar display in accordance with a traveling state;
FIG. 6 is a view showing a change in a blind spot region when the vehicle travels; and
FIG. 7 is an explanatory view showing an ON/OFF of the pillar display when the vehicle travels on a right curve.

A specific embodiment of a driving support device, a driving support method and a program according to the present invention that is implemented in a navigation apparatus will be explained in detail below with reference to the drawings.

### [Embodiment]

### [Schematic configuration of vehicle]

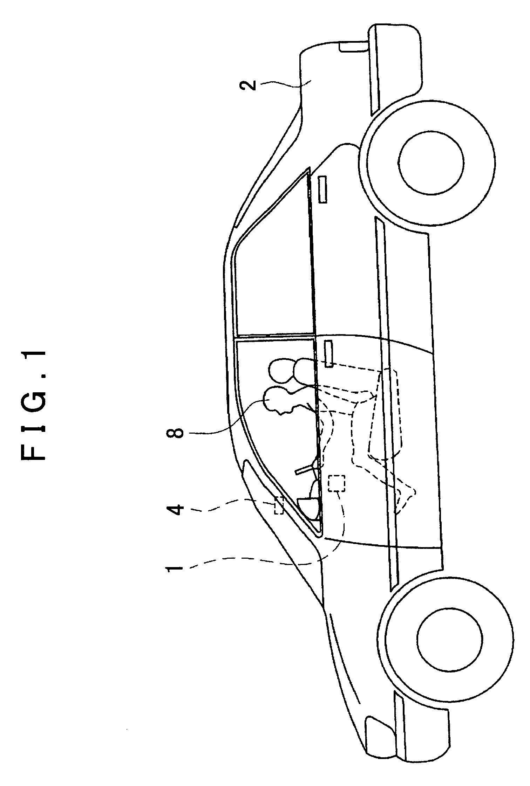

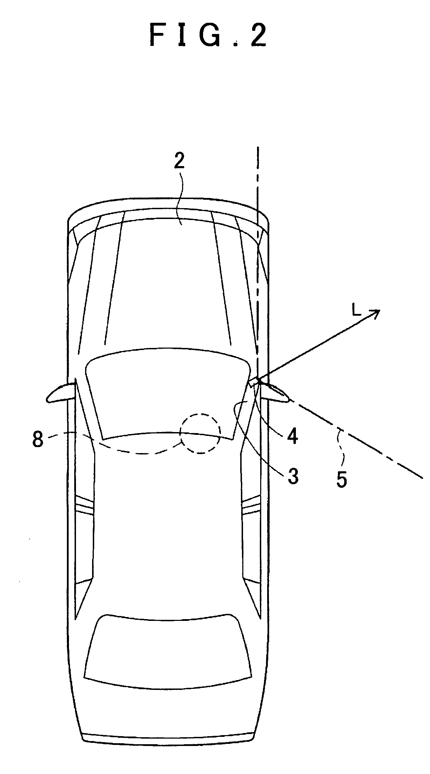

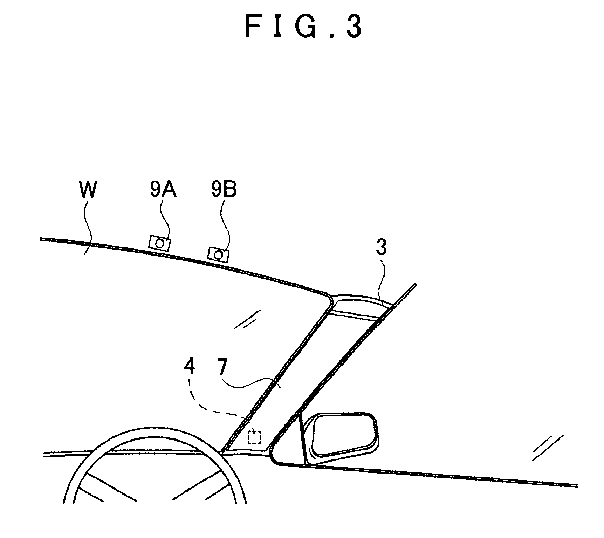

Firstly, a schematic configuration of a vehicle on which a navigation apparatus according to the present embodiment is mounted will be described based on FIG. 1 to FIG. 3. FIG. 1 is an exterior view of a vehicle 2 on which a navigation apparatus 1 according to the present embodiment is mounted. FIG. 2 is a view showing a setting example of a camera. FIG. 3 is a view showing an example of a pillar display provided on a right front pillar.

As shown in FIG. 1 to FIG. 3, the navigation apparatus 1 is set on a center console or a panel surface in the interior of the vehicle 2. A camera 4 configured by a CCD camera or the like which captures a color image is attached to the outside of a right front pillar 3 of the vehicle 2. As shown in FIG 2, the camera 4 is set with its optical axis direction L set to be directed downward by a predetermined angle with respect to a horizontal direction. Further, the optical axis direction L of the camera 4 is directed ahead of the vehicle 2 on the right, and within a predetermined range with the optical axis direction L as a center is set as a shooting region 5 in which peripheral environments can be shot by the camera 4.

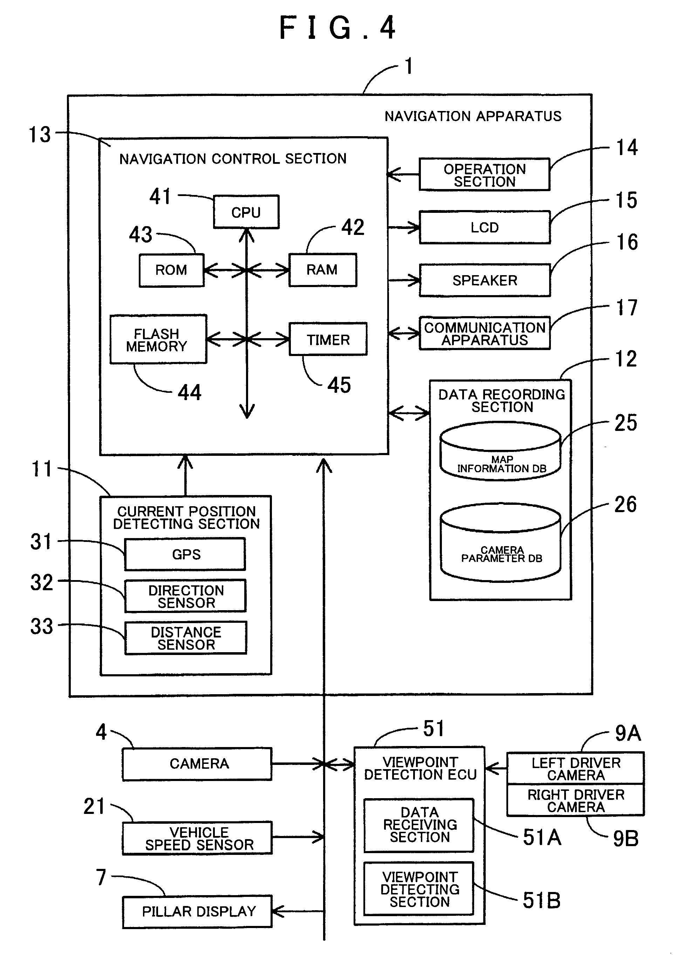

Further, as shown in FIG. 3, a pillar display 7 configured by a liquid crystal display, an organic electro-luminescence (EL) display or the like is attached to the inside surface of the right front pillar 3. The camera 4 shoots an image ahead of the vehicle 2 on the right when the vehicle 2 travels or stops, and the shot image that was shot is once stored in a RAM 42 (refer to FIG. 4). Thereafter, as will be described later, an image of range corresponding to a blind spot region generated by the right front pillar 3 is extracted from the shot image, and displayed on the pillar display 7. Note that in the present embodiment, the optical axis direction L is set to be the same direction as a visual recognition direction of the right front pillar 3 seen from a driver 8, namely, a direction of the blind spot region generated by the right front pillar 3 seen from the driver 8.

Further, on an upper end portion of a front window W1 in front of the driver 8 seen from the interior of the vehicle 2, a left driver camera 9A and a right driver camera 9B for detecting a viewpoint position of the driver 8 are disposed in a substantially horizontal position. Further, as will be described later, in the present embodiment, image data shot by each of the driver cameras 9A and 9B is input into a viewpoint detection electronic control unit (ECU) 51 (refer to FIG. 4), the viewpoint position of the driver 8 is detected and is output to the navigation apparatus 1. Subsequently, the navigation apparatus 1 calculates the blind spot region for the driver 8 generated by the right front pillar 3 based on the detection result of the viewpoint detection ECU 51, as will be described later.

### [Schematic configuration of navigation apparatus]

Next, based on FIG. 4, a configuration relating to a control system of the vehicle 2 according to the present embodiment will be described particularly with a focus on the navigation apparatus 1. FIG. 4 is a block diagram schematically showing the control system having the navigation apparatus 1 to be mounted on the vehicle 2 as a center.

As shown in FIG. 4, the control system of the vehicle 2 is basically configured by the navigation apparatus 1, and the camera 4, the pillar display 7 and the viewpoint detection ECU 51 electrically connected to the navigation apparatus 1, and predetermined peripheral devices are connected to respective control devices.

The navigation apparatus 1 is configured by a current position detecting section 11 detecting a current position of a vehicle (hereinafter, referred to as "vehicle position"), a data recording section 12 in which various types of data are recorded, a navigation control section 13 performing various types of arithmetic operations based on input information, an operation section 14 accepting operations from an operator, a liquid crystal display (LCD) 15 which displays information such as maps to the operator, a speaker 16 which outputs voice guidance related to route guidance, a communication apparatus 17 that carries out a mutual communication with information centers such as a road traffic information center (VICS: registered trademark), and the like. In addition, a vehicle speed sensor 21 which detects a traveling speed of the vehicle is connected to the navigation control section 13.

Hereinafter, respective components that configure the navigation apparatus 1 will be explained.
As shown in FIG. 4, the current position detecting section 11 is composed of a GPS 31, a direction sensor 32, a distance sensor 33, an altimeter (not shown) and the like, and enables to detect the vehicle position, a vehicle direction and the like.

The data recording section 12 is provided with a hard disk (not shown) being an external storage device and a recording medium, a map information database (map information DB) 25 stored in the hard disk, a camera parameter database (camera parameter DB) 26, and a recording head (not shown) being a driver for reading a predetermined program and the like, and for writing predetermined data in the hard disk.

The map information DB 25 is configured by various types of information necessary for the route guidance and map display and is configured by, for example, new road information for specifying respective new roads, map display data for displaying maps, intersection data related to each intersection, node data regarding node points, link data related to roads (links), search data for searching for routes, store data related to a point of interest (POI) for a store or the like that is a type of facilities, search data for searching for points and the like. In addition, the contents of the map information DB 25 are updated by downloading updated information that is distributed from a not-shown information distribution center via the communication apparatus 17.

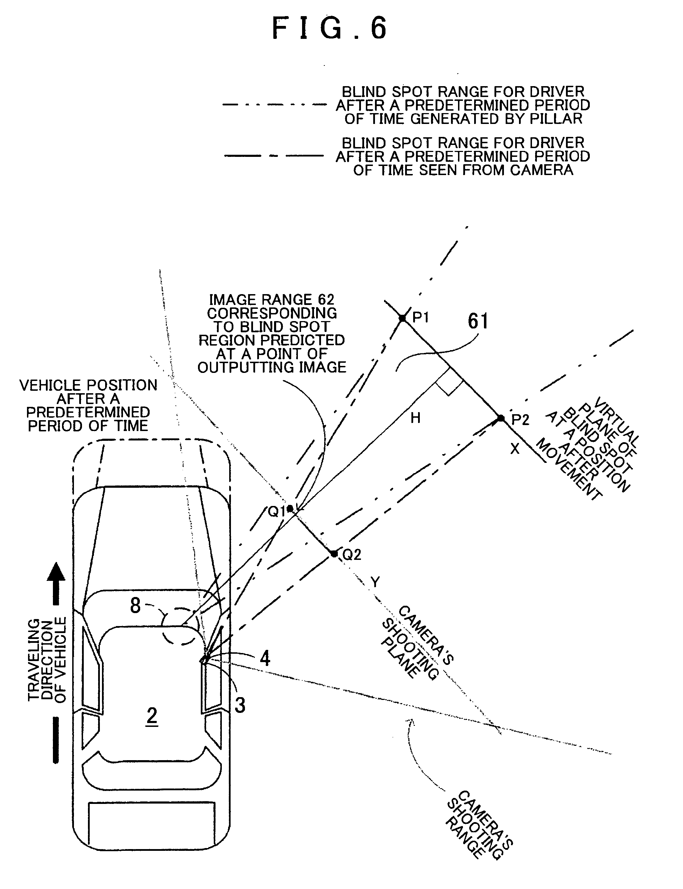

The camera parameter DB 26 stores various types of parameters regarding the camera 4. For instance, in the present embodiment, the camera parameter DB 26 stores information regarding a setting position, a setting angle, a shooting range, an imaging plane of camera (refer to FIG. 6) and the like of the camera 4 with respect to the vehicle 2. The CPU 41 of the navigation apparatus 1 extracts an image corresponding to a blind spot region generated by the right front pillar 3 from the shot image shot by the camera 4 using the various types of parameters stored in the camera parameter DB 26.

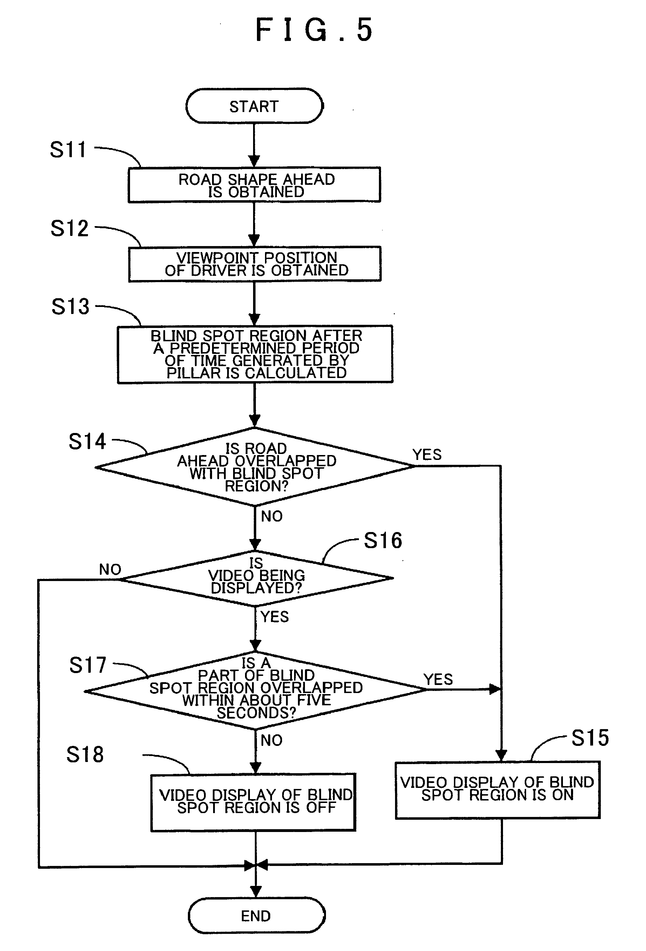

As shown in FIG. 4, the navigation control section 13 which configures the navigation apparatus 1 includes the CPU 41 being an arithmetic device and a control device that carry out an overall control of the navigation apparatus 1, internal storage devices such as a RAM 42 used as a working memory when the CPU 41 performs various kinds of arithmetic processing and in which route data or the like when the route is searched is stored, a ROM 43 that stores, in addition to control programs, an image display processing program (refer to FIG. 5) which displays a video of a road ahead in a traveling direction on the pillar display 7 in accordance with a traveling state, which will be described later, and a flash memory 44 that stores the programs read from the ROM 43, a timer 45 that measures time, and the like.

In the present embodiment, various types of programs are stored in the ROM 43 and various types of data are stored in the data recording section 12, but, the programs, data and the like can be read from the same external storage device, memory card and the like and can be written on the flash memory 44. Further, it is possible to update the programs, data and the like by replacing the memory card and the like.

Further, respective peripheral devices (actuators) for the operation section 14, the liquid crystal display 15, the speaker 16, and the communication apparatus 17 are electrically connected to the navigation control section 13.

The operation section 14 is operated when a current position at the start of the travel is corrected, a place of departure and a destination are input respectively as a guidance starting point and a guidance end point, when carrying out a search of information related to facilities, and the like, and is configured by a plurality of operation switches such as various types of keys. Based on switch signals output when the respective switches are pressed, or the like, the navigation control section 13 performs a control so as to execute various kinds of operations corresponding to the switch signals. Note that the operation section 14 can also be configured by a keyboard, a mouse and the like, and by a touch panel provided on a front face of the liquid crystal display 15.
On the liquid crystal display 15, operation guidance, operation menus, key guidance, a guidance route from the current position to the destination, guidance information along the guidance route, traffic information, news, weather forecasts, time, mails, TV programs and the like are displayed.

Based on instructions from the navigation control section 13, the speaker 16 outputs travel guidance along the guidance route, voice guidance which gives a warning to stop or to confirm the safety at an intersection and a crosswalk, and the like. Here, examples of voice guidance to be provided include " 200 m ahead, turn right at XY intersection." and the like.

The communication apparatus 17 is a communicating unit that communicates with the information distribution center using a mobile phone network and the like, and transmits/receives new updated map information with the latest version and the like with the information distribution center. Further, the communication apparatus 17 receives traffic information formed of respective pieces of information such as traffic jam information and information regarding crowding conditions at service areas which were transmitted from not only the information distribution center but also a road traffic information center (VICS (registered trademark)) and the like.

The viewpoint detection ECU 51 is provided with a data receiving section 51A which receives control information transmitted from the navigation control section 13, and a viewpoint detecting section 51B which controls the respective driver cameras 9A and 9B based on the received control information and detects a direction of face, positions of eyes, the viewpoint position and the like of the driver 8. Based on the control signal received from the navigation control section 13, the viewpoint detection ECU 51 outputs data regarding a head position, the direction of face, the positions of eyes, the viewpoint position and the like of the driver 8.

### [Image display processing]

Next, the image display processing being a processing to be executed by the CPU 41 of the navigation apparatus 1 configured as above and displaying the video of the road ahead in the traveling direction on the pillar display 7 in accordance with the traveling state, will be described based on FIG. 5 to FIG. 7.

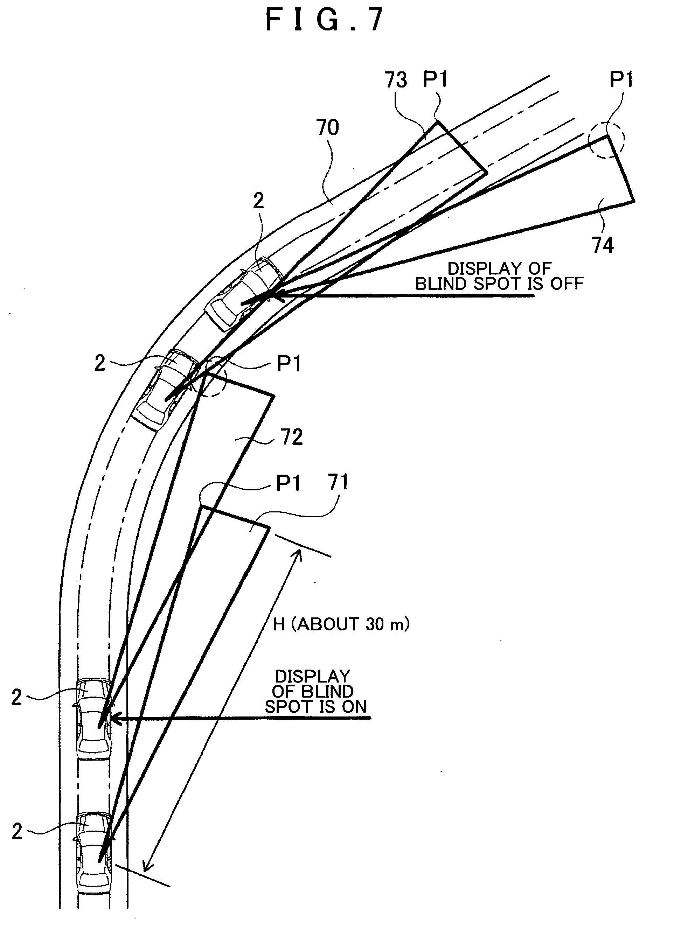

FIG. 5 is a flow chart showing the image display processing which displays the video of the road ahead in the traveling direction on the pillar display 7 in accordance with the traveling state. FIG. 6 is a view showing a change in a blind spot region when the vehicle 2 travels. FIG. 7 is an explanatory view showing an ON/OFF of the pillar display 7 when the vehicle 2 travels on a right curve.
Note that the program shown by the flow chart in FIG. 5 is stored in the ROM 43 provided in the navigation control section 13 of the navigation apparatus 1, and is executed by the CPU 41 at every predetermined time (approximately every 0.1 second, for instance).

As shown in FIG. 5, in step (hereinafter, abbreviated to S) 11, the CPU 41 first detects a vehicle position and a vehicle direction indicating a direction of the vehicle using the current position detecting section 11, and stores coordinate data (which is, for instance, latitude and longitude data) indicating the vehicle position and the vehicle direction in the RAM 42. Further, the CPU 41 obtains, from the map information stored in the map information DB 25, road shape information relating to a shape of the road ahead of the vehicle 2 (which is, for instance, up to about 200 m to 300 m before the vehicle position) such as, for instance, node data and link data, and stores the information in the RAM 42.

Here, the node data is data regarding actual branch points of the roads (including intersections, T-intersections and the like), coordinates (positions) of node points that are set in each of the roads at a predetermined distance according to a curvature radius thereof or the like, a node attribute that shows whether each node corresponds to an intersection or not, a connected link number list being a list of link IDs being identification numbers of links that are connected to the nodes, an adjacent node number list being a list of node numbers of the nodes that are positioned adjacent to the nodes via links, and an altitude or the like of the respective node points.

Further, as the link data, the following pieces of data can be included: regarding respective road links (hereinafter, refer to as "links") which structure roads, data indicating a width of the road to which the link belongs, an gradient, a cant, a bank, road surface conditions, the number of lanes of the road, locations at which the number of lanes is reduced, locations at which the width of the road becomes smaller, crossings and the like; regarding corners, data indicating a curvature radius, intersections, T-intersections, an entrance and an exit of comers; regarding a road attribute, data indicating downhill roads, uphill roads and the like; and regarding types of the roads, data indicating general roads such as national roads, prefectural roads and small streets as well as toll roads such as national expressways, urban expressways, ordinary toll roads, and toll bridges and the like.

In S12, the CPU 41 obtains data regarding the head position, the direction of face, the positions of eyes, the viewpoint position and the like of the driver 8 from the viewpoint detection ECU 51, and stores the data in the RAM 42.
Next, in S 13, the CPU 41 obtains a vehicle speed of the vehicle 2 based on the detection result of the vehicle speed sensor 21. Subsequently, the CPU 41 predicts a vehicle position after a predetermined period of time based on the traveling state of the vehicle 2 such as the vehicle position, the vehicle direction and the vehicle speed, and further, it calculates a blind spot region of the vehicle 2 at the predicted position. Note that the predetermined period of time is a required period of time from the shooting of the image of the peripheral environments using the camera 4 to the display of the shot image on the pillar display 7, and a value thereof is determined depending on the performance of the camera 4 and the CPU 41. For instance, the value is set to about 0.1 second in the present embodiment.

Here, a calculation processing of the blind spot region of the vehicle 2 after the predetermined period of time (namely, at the point in time when displaying the shot image) to be executed in the aforementioned S 13 will be specifically described using FIG. 6.
As shown in FIG. 6, the CPU 41 first predicts the vehicle position after the predetermined period of time based on the data regarding the head position, the direction of face, the positions of eyes, the viewpoint position and the like of the driver 8 obtained in the aforementioned S12 and the predicted vehicle position after the predetermined period of time. Further, based on the predicted vehicle position, the CPU 41 predicts a head position and a viewpoint position of the driver 8 after the predetermined period of time.
Subsequently, based on the prediction result of the head position and the viewpoint position of the driver 8 after the predetermined period of time and a position and a shape of the right front pillar 3 with respect to the head position of the driver 8, the CPU 41 calculates the blind spot region for the driver 8 after the predetermined period of time generated by the right front pillar 3.

Subsequently, the CPU 41 sets a virtual plane X after the predetermined period of time based on the blind spot region for the driver 8 after the predetermined period of time generated by the right front pillar 3. Here, the virtual plane X is a plane for correcting a mismatch between a visibility of the camera 4 and a visibility of the driver 8, and is a virtual surface set in accordance with a visual angle of the driver in which the viewpoint of the driver 8 is determined as the origin. Note that the virtual plane X is set at a position orthogonal to a line H which joins the predicted head position of the driver 8 and a center of the right front pillar 3 with a predetermined distance (which is, for example, about 30 m) apart from the vehicle 2.

Next, the CPU 41 calculates overlap regions P1 to P2 between the blind spot region for the driver 8 after the predetermined period of time and the virtual plane X, and stores position coordinates (longitude and latitude, for instance) of respective end points P1 and P2 of the overlap regions P1 to P2 in the RAM 42. In addition, the CPU 41 stores a triangular region formed by joining the head position of the driver 8 and the respective end points P1 and P2, in the RAM 42 as a blind spot region 61 to be displayed on the pillar display 7.

Thereafter, in S 14, the CPU 41 conducts a determination processing in which the road shape information regarding the shape of the road ahead in the traveling direction of the vehicle 2 obtained in the aforementioned S11 is read, and it is determined whether or not at least a part of the blind spot region for the driver 8 after the predetermined period of time calculated in the aforementioned S13 is overlapped with the road ahead in the traveling direction.

If it is determined that at least a part of the blind spot region for the driver 8 after the predetermined period of time is overlapped with the road ahead in the traveling direction (S14: YES), the CPU 41 proceeds to a processing of S 15. For instance, as shown in FIG. 7, when a road shape of a road 70 ahead in the traveling direction of the vehicle 2 takes a right curve, and a state where an end point P1 of a blind spot region 71 for the driver 8 is not overlapped with the right curve is changed to a state where an end point P1 of a blind spot region 72 for the driver 8 after the predetermined period of time is overlapped with the right curve (S14: YES), the CPU 41 proceeds to the processing of S15.

Subsequently, in S 15, the CPU 41 outputs shot image data of the blind spot region for the driver 8 generated by the right front pillar 3 shot by the camera 4 to the pillar display 7, to thereby start displaying a video of the road ahead in the traveling direction being blocked by the right front pillar 3 seen from the driver 8, and thereafter, it terminates the processing, as shown in FIG. 5.

Here, a display processing which displays the shot image data of the blind spot region for the driver 8 generated by the right front pillar 3 shot by the camera 4 on the pillar display 7 will be described based on FIG. 6.
As shown in FIG. 6, the CPU 41 obtains a camera's shooting plane Y corresponding to the virtual plane X obtained in the aforementioned processing of S13. Note that the camera's shooting plane Y is previously determined based on a design value (a resolution, a setting angle with respect to a vehicle body, and so on) and the like of the camera 4, and is stored in the camera parameter DB 26. The camera 4 focuses on the camera's shooting plane Y and shoots the image.

Next, the CPU 41 calculates a visibility region in which the overlap regions P1 to P2 between the blind spot region for the driver 8 and the virtual plane X match the visibility of the camera 4 (namely, the blind spot region for the driver after the predetermined period of time seen through the camera), and specifies regions Q1 to Q2 in which the calculated visibility region and the camera's shooting plane Y overlap as an image range 62 corresponding to the blind spot region of the vehicle 2 after the predetermined period of time (point in time when displaying the captured image). In addition, the CPU 41 extracts an image of the image range 62 from the shot image shot by the camera 4 in which the camera's shooting plane Y is focused on.

Subsequently, the CPU 41 performs a projection conversion of the extracted image of the image range 62 to project it on the virtual plane X. Note that the projection conversion is a processing to perform a coordinate transformation in which coordinates of each pixel of the image existing in the image range 62 in the camera's shooting plane Y are transformed to those of each pixel of the virtual plane X, and is conducted by using a publicly known coordinate transformation. Further, the CPU 41 converts the image being projection-converted on the virtual plane X in accordance with the shape of the right front pillar 3 stored in the ROM 43, and sets it as image data to be output to the pillar display 7. After that, the CPU 41 outputs the image data to the pillar display 7, thereby displaying the video of the road ahead in the traveling direction being blocked by the right front pillar 3 on the pillar display 7 set on the inside of the right front pillar 3.

Meanwhile, when it is determined that the blind spot region for the driver 8 after the predetermined period of time is not overlapped with the road ahead in the traveling direction (S14: NO) as shown in FIG. 5, the CPU 41 proceeds to a processing of S16. For instance, as shown in FIG. 7, when the road shape of the road 70 ahead in the traveling direction of the vehicle 2 takes a right curve, and a state where a blind spot region 73 for the driver 8 is overlapped with the right curve is changed to a state where an end point P1 of a blind spot region 74 for the driver 8 after the predetermined period of time is not overlapped with the right curve (S 14: NO), the CPU 41 proceeds to the processing of S16.

In S16, the CPU 41 executes a determination processing in which the shot image data of the blind spot region is output to the pillar display 7 and it is determined whether or not the video ahead in the traveling direction being blocked by the right front pillar 3 seen from the driver 8 is displayed.
When the video ahead in the traveling direction being blocked by the right front pillar 3 seen from the driver 8 is not displayed on the pillar display 7 (S16: NO), the CPU 41 terminates the processing.

Meanwhile, when the video ahead in the traveling direction being blocked by the right front pillar 3 seen from the driver 8 is displayed on the pillar display 7 (S16: YES), the CPU 41 proceeds to a processing of S 17. In S 17, the CPU 41 caries out a determination processing which determines whether or not the blind spot region for the driver 8 is again overlapped with the road within about five seconds from the time at the current position. Note that the length of time is not limited to five seconds or shorter, and any length of time can be selected as long as it is appropriate for preventing a frequent ON/OFF switching of the display of the video on the pillar display 7.

Concretely, the CPU 41 reads again the road shape information regarding the shape of the road ahead in the traveling direction of the vehicle 2 obtained in the aforementioned S11. Further, the CPU 41 predicts vehicle positions at approximately every 0.1 second from the time at the current position using the traveling state of the vehicle 2 such as the vehicle position, the vehicle direction and the vehicle speed. In addition, the CPU 41 calculates respective blind spot regions for the driver 8 generated by the right front pillar 3 at the positions which were predicted at approximately every 0.1 second. Note that the CPU 41 calculates the respective blind spot regions for the driver 8 at the respective positions of the vehicle 2 which were predicted at approximately every 0.1 second from the time at the current position to the time about five seconds after that.

Next, the CPU 41 executes a determination processing, with respect to the respective blind spot regions for the driver 8 calculated from the time at the current position to the time about five seconds after that, which determines whether or not at least a part of either of the blind spot regions is overlapped with the road ahead in the traveling direction.
Subsequently, if at least a part of either of the respective blind spot regions for the driver 8 calculated from the time at the current position to the time about five seconds after that is overlapped with the road ahead in the traveling direction (S17: YES), the CPU 41 again carries out the processing of S15 and processing thereafter, and then terminates the processing.

Meanwhile, if none of the respective blind spot regions for the driver 8 calculated from the time at the current position to the time about five seconds after that is overlapped with the road ahead in the traveling direction (S17: NO), the CPU 41 proceeds to a processing of S 18. In S 18, the CPU 41 stops the output of shot image data of the blind spot region for the driver 8 generated by the right front pillar 3 shot by the camera 4 to the pillar display 7, thereby stopping the display of the video on the pillar display 7, and thereafter, it terminates the processing.

### [Effect of the aforementioned embodiment]

As has been described above in detail, in the navigation apparatus 1 according to the present embodiment, the CPU 41 obtains the road shape information regarding the shape of the road ahead of the vehicle 2 from the map information stored in the map information DB 25. Further, the CPU 41 calculates the blind spot region for the driver 8 after the predetermined period of time generated by the right front pillar 3. In addition, when it is determined that at least a part of the calculated blind spot region is overlapped with the road ahead in the traveling direction, the CPU 41 outputs the shot image data corresponding to the blind spot region shot by the camera 4 to the pillar display 7, to thereby start displaying the video of the road ahead in the traveling direction being blocked by the right front pillar 3 seen from the driver 8 (S11 through S 14: YES to S 15).

Accordingly, by watching the video displayed on the pillar display 7, the driver 8 can continuously and carefully watch the road ahead in the traveling direction without being blocked by the right front pillar 3, which can be helpful for safe driving.

Further, even if the blind spot region for the driver 8 is no longer overlapped with the road, if the blind spot region is again overlapped with the road within about five seconds, the CPU 41 outputs the shot image data corresponding to the blind spot region to the pillar display 7 and keeps displaying the video of the road ahead in the traveling direction being blocked by the right front pillar 3 seen from the driver 8 (S 14: NO to S 17: YES to S 15).

Accordingly, for instance, when the road shape is the one in which a right curve and a left curve are continued such as an S-curve, as shown in FIG. 7, if the vehicle passes through the left curve within about five seconds after the end point P1 of the blind spot region 74 for the driver 8 is no longer overlapped with the right curve 70, and thereafter, the vehicle travels on the next right curve and the blind spot region for the driver 8 is again overlapped with the road, or the like, the video of the road ahead in the traveling direction being blocked by the right front pillar 3 seen from the driver 8 is kept displayed on the pillar display 7.
Accordingly, it becomes possible to eliminate a trouble for the driver 8 by preventing a frequent ON/OFF switching of the display of the video on the pillar display 7.

Meanwhile, when the blind spot region for the driver 8 is not overlapped with the road again within about five seconds after it was no longer overlapped with the road, the CPU 41 stops the display of the video ahead in the traveling direction being blocked by the right front pillar 3 seen from the driver 8 on the pillar display 7 (S17: NO to S 18).
Accordingly, when the blind spot region for the driver 8 is not overlapped with the road ahead in the traveling direction, the display of the video on the pillar display 7 is stopped, so that the driver 8 can be prevented from paying attention to unnecessary video display of the blind spot region.

It should be noted that the present invention is not limited to the aforementioned embodiment, and it is needless to say that various improvements and modifications can be made without departing from the scope of the present invention. For example, it may be configured as follows.

(A) When the shape of the road ahead of the vehicle 2 (which is, for instance, up to about 300 m before the vehicle position) obtained in the aforementioned S11 takes continuous curves such as an S-curve, the CPU 41 first outputs, in the aforementioned processing of S 15, the shot image data of the blind spot region for the driver 8 generated by the right front pillar 3 shot by the camera 4 to the pillar display 7, to thereby start displaying the video of the road ahead in the traveling direction being blocked by the right front pillar 3 seen from the driver 8. Thereafter, the CPU 41 continuously outputs the shot image data of the blind spot region for the driver 8 generated by the right front pillar 3 shot by the camera 4 to the pillar display 7, thereby continuously displaying the video of the blind spot region for the driver 8 being blocked by the right front pillar 3 until the vehicle 2 passes through the last curve. It is also possible to design such that the CPU 41 executes the aforementioned processing of S16 when the vehicle 2 passes through the last curve. Accordingly, it becomes possible to eliminate a trouble for the driver 8 by preventing a frequent ON/OFF switching of the display of the video on the pillar display 7.

(B) Further, for instance, it is possible to set the camera 4 also on a left front pillar of the vehicle 2 and to set the pillar display 7 on the inside of the left front pillar. Further, it is also possible to design such that the CPU 41 displays, when blind spot regions generated by the respective left and right front pillars are overlapped with the road ahead in the traveling direction, the video of the road ahead in the traveling direction being blocked by the respective front pillars on the respective pillar displays 7. Accordingly, the driver 8 can carefully watch the road ahead in the traveling direction being blocked by the respective left and right front pillars, without being blocked by the respective front pillars.

(C) Further, for example, it is also possible to design such that the CPU 41 calculates, in the aforementioned S 13, the blind spot region of the vehicle 2 at the current point of time based on the vehicle position and the vehicle direction at the current point of time. In addition, it is also possible to design such that the CPU 41 sets, in the aforementioned S 15, a virtual plane X2 at the current point of time instead of the virtual plane X after the predetermined period of time which is set in the aforementioned S13. Namely, it is also possible to design such that the CPU 41 sets, instead of the virtual plane X, the virtual plane X2 at a position orthogonal to the line H which joins the current head position of the driver 8 and the center of the right front pillar 3 with a predetermined distance (which is, for example, about 30 m) from the vehicle 2. Subsequently, the CPU 41 obtains the current shot image data of the camera 4 corresponding to the virtual plane X2, and performs a projection conversion of the shot image data to project it on the virtual plane X2. Further, the CPU 41 may be designed to output the image being projection-converted on the virtual plane X2 as image data to be displayed on the pillar display 7. Accordingly, the image of the blind spot region for the driver 8 can be displayed in real time on the pillar display 7.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A driving support device, comprising:
an image data obtaining unit (41) obtaining image data from a shooting unit (4) shooting images of an outside of a vehicle (2);
a calculating unit calculating a blind spot region for a driver (8) generated by a front pillar (3) of the vehicle (2);
a road shape information obtaining unit (41) obtaining road shape information regarding a shape of a road ahead in a traveling direction of the vehicle (2);
a blind spot region determining unit (41) determining, based on the road shape information, whether or not at least a part of the blind spot region for the driver (8) is overlapped with the road ahead in the traveling direction; and
an image data output control unit (41) controlling to output the image data when at least a part of the blind spot region for the driver (8) is determined to be overlapped with the road ahead in the traveling direction, and controlling not to output the image data when the blind spot region for the driver (8) is determined not to be overlapped with the road ahead in the traveling direction.

2. The driving support device according to claim 1, wherein
the image data output control unit (41) controls, after controlling to output the image data, not to output the image data when at least a part of the blind spot region for the driver (8) is not overlapped with the road ahead in the traveling direction for a predetermined period of time or more.

3. The driving support device according to claim 1 or 2, further comprising
a continuous curve determining unit (41) determining, based on the road shape information, whether or not the shape of the road ahead in the traveling direction of the vehicle (2) takes curves which continue for a predetermined distance or less,
when the shape of the road ahead in the traveling direction of the vehicle (2) is determined to be curves which continue for a predetermined distance or less based on the road shape information, the image data output control unit (41) controls to output the image data, and thereafter, to continuously output the image data until the vehicle (2) passes through the last curve.

4. A driving support method, comprising the steps of:
obtaining image data from a shooting unit (4) shooting images of an outside of a vehicle (2);
calculating a blind spot region for a driver (8) generated by a front pillar (3) of the vehicle (2);
obtaining (S11) road shape information regarding a shape of a road ahead in a traveling direction of the vehicle (2);
determining, based on the road shape information obtained in the road shape information obtaining step (S11), whether or not at least a part of the blind spot region for the driver (8) calculated in the calculating step is overlapped with the road ahead in the traveling direction; and
controlling (S 15) to output the image data obtained in the image data obtaining step when it is determined by the blind spot region determining step that at least a part of the blind spot region for the driver (8) is overlapped with the road ahead in the traveling direction, and controlling (S 18) not to output the image data when it is determined by the blind spot region determining step that the blind spot region for the driver (8) is not overlapped with the road ahead in the traveling direction.

5. A program causing a computer to execute the steps of:
obtaining image data from a shooting unit (4) shooting images of an outside of a vehicle (2);
calculating a blind spot region for a driver (8) generated by a front pillar (3) of the vehicle (2);
obtaining (S11) road shape information regarding a shape of a road ahead in a traveling direction of the vehicle;
determining, based on the road shape information obtained in the road shape information obtaining step (S11), whether or not at least a part of the blind spot region for the driver (8) calculated in the calculating step is overlapped with the road ahead in the traveling direction; and
controlling (S15) to output the image data obtained in the image data obtaining step when it is determined by the blind spot region determining step that at least a part of the blind spot region for the driver (8) is overlapped with the road ahead in the traveling direction, and controlling (S18) not to output the image data when it is determined by the blind spot region determining step that the blind spot region (8) for the driver is not overlapped with the road ahead in the traveling direction.
